# EUROPEAN PATENT SPECIFICATION

(11) **EP 2 233 400 B1**
(45) Date of publication and mention of the grant of the patent: **08.05.2013**
(21) Application number: 10157661.9
(22) Date of filing: 24.03.2010
(51) Int. Cl.: B65B 5/10, B65B 35/36, B65G 47/52

(54) **Packaging process and plant**
Verpackungs-Verfahren und Vorrichtung
Procédé et dispositif d'emballage

(30) Priority: 25.03.2009 IT TO20090228
(43) Date of publication of application: 29.09.2010
(73) Proprietor: CARLE & MONTANARI - OPM S.p.A., Rozzano (MI) (IT)
(72) Inventor: Giacobbe, Fulvio, 12050 Guarene (IT); Zallio, Pierfrancesco, Località Quinto Dè Stampi Rozzano (MI) (IT); Gurrieri, Dario, 12051 Alba (IT)
(74) Representative: Jorio, Paolo

(56) References cited:
- EP-A1- 0 856 465
- US-A- 6 122 895
- US-A1- 2003 182 898

## Description

The present invention relates to a packaging process for transferring products into containers using a series of robots.

In known packaging plants, a conveyor belt carries a flow of products to be packaged at random positions and moves at a constant speed and parallel to a conveying line for containers, defined by boxes, jars or simply delimited areas on the conveyor. The containers are spaced evenly apart and fed at an adjustable speed. The products are picked up from the conveyor belt and placed in the containers by means of robots, arranged in series above such conveyor belt.

The plant comprises a vision system that is arranged at the beginning of the conveyor belt, determines the positions of the approaching products and sends information relating to said positions to one or more control units associated with the robots.

The speed of the containers is set as a function of the number of approaching products, but the instantaneous number of products per unit of time actually varies considerably, depending on the system that unloads the products onto the conveyor belt upstream of the robots.

A control unit associated with the last robot, considering the advance direction of the containers, is configured to control the filling of any empty places in such containers. If the containers and products are fed on a co-flow basis, there might not be any products on the conveyor belt for the last robot, having been picked up by the previous robots. The speed of the containers is temporarily lowered to prevent partially empty containers from leaving the line. In this way, however, the previous robots tend to overfill the boxes: in other words, the opposite situation is generated, in which subsequent containers have no empty places in which the last robot can place the products reaching the end of the conveyor belt. In this situation, the speed of the container conveyor line is increased to prevent these excess products from leaving the line and being rejected.

Repeatedly decelerating and accelerating the line does not always compensate for the fluctuations in product flow rates and tends to cause the system to oscillate unstably and unpredictably. The following solutions can be adopted to limit such inconveniences, i.e. maintain the speed of the containers as constant as possible:
- recirculating excess products that tend to leave the line and sending them back to the beginning of the conveyor belt (thus increasing the overall dimension of the plant) ;
- spacing the empty containers on the relative conveying line at adjustable distances apart, as a function of the number of approaching products, as described in European patent EP0749902;
- feeding the containers in the opposite direction to the products, as described in European patent EP0856465 and in patent US6122895.

US6122895 also suggests to provide two container conveyor belts, and to move one of them at the maximum possible speed, whereas the other container conveyor belt moves at a lower speed, so that the containers on the latter belt serve as a buffer means.

The object of the present invention is to provide a packaging process for transferring products into containers using a series of robots, which constitutes an efficient alternative to the solutions described above.

According to the present invention there is provided a packaging process for transferring products into containers using a series of robots, as defined in claim 1.

The present invention also relates to a packaging plant for inplementing the method cf claim 1.

The invention will now be described with reference to the accompanying figure, which is a schematic plan view of a nonlimiting embodiment of a plant that implements the packaging process according to the present invention.

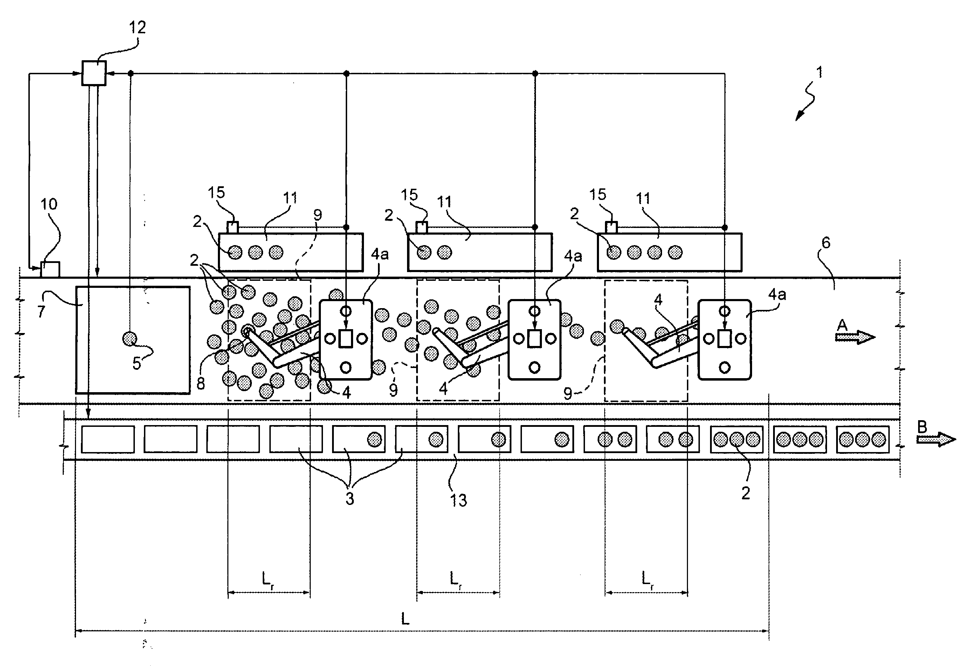

In figure 1, designated as a whole by number 1 is a packaging plant (partially and schematically illustrated) for transferring products 2 (for example chocolates or snacks) into containers 3 using a series of robots 4 which are controlled by respective processing and control units 4a on the basis of information supplied by a vision system 5.

The products 2 are placed or unloaded at random positions, onto the upper surface of a conveyor belt 6 by means of a production or conveying system that is not illustrated, at the start of the path defined by conveyor belt 6. The products 2 may all be of the same kind, or of different kinds: in the latter case, each container 3 may be filled with different kinds of products or with a single kind of product.

The conveyor belt 6 is driven by an electric motor (not illustrated) to feed the products 2 in a rectilinear direction A, preferably at a constant speed V, controlled by a central processing and control unit 12, separate from the units 4a. Before reaching a series of pick-up areas 9 defined by the field range in which the respective robots 4 operate, the products are conveyed by the conveyor belt 6 through a sensing area 7 covered by the vision system 5. The vision system 5 comprises at least a video camera (or a camera) and a data processing unit, which processes the images taken by the video camera, determines the position, orientation and number of products 2 passing through the area 7 and sends the relative information to the units 4a.

The robots 4 are preferably anthropomorphic, delta or scara robots, arranged so as to define a sequence of areas 9 along the direction A, fitted to supporting structures, which are not illustrated, arranged above the conveyor 6, for example bridge structures, and comprise respective gripping members 8 defined by suction caps or grippers. According to an alternative embodiment that is not illustrated, each supporting structure bears two robots 4, counterposed along the direction A. The areas 9 into which the gripping members 8 can reach each have a length Lr along the direction A, and the robots 4 engage an overall length L of the conveyor belt 6.

The plant 1 also comprises, for each robot 4, a relative buffer or parking area 11, provided with a plurality of places for the products 2 and preferably arranged by the side of the conveyor belt 6. In the example illustrated in figure 1, the buffers 11 are defined by fixed horizontal supporting surfaces: alternatively, they are defined by horizontal motor-powered belts or loaders, for example vertical or drum loaders.

According to a preferred embodiment, position sensors 15 are provided to determine the position and/or orientation of the products 2 in the buffer 11 and send the relative information to the units 4a, in order to enhance the precision with which the products 2 are picked up from the buffers 11. Said sensors are not however strictly necessary in all those cases which do not require critical levels of precision.

The containers 3 are defined, for example, by boxes or trays, each having a given number Npc of positions to be filled, and are fed in a direction B parallel to the direction A in relative fixed positions on a conveyor 13, for example a chain conveyor, which is arranged by the side of the conveyor belt 6, on the opposite side with respect to the buffers 11. In the example that is illustrated, the containers 3 are arranged at a constant distance or pitch, and the conveyor 13 is powered so as to feed the row of containers 3 in the same direction as the products 2.

The unit 12 adjusts the speed of the conveyor 13 and, thus, the speed of the containers 3 as a function of the rate of approaching products, i.e. as a function of the number of approaching products 2 per unit of time, in order to prevent the products 2 leaving the end of the conveyor belt 6 and thus being rejected. The rate of approaching products has a substantially constant average component and an oscillating component, which depend on the production or conveying system arranged upstream of the plant 1.

The unit 12 calculates a value Vpt equal to the number of products 2 conveyed in a sufficiently large reference range, such as to obtain a value Vpt which is indicative of an average or overall rate of approaching products. Said reference range may be a length of the conveyor belt 6, an area of the conveyor belt 6 or a conveying time; preferably, it is equal to the time Tt necessary to pass through all the areas 9, i.e. to cover the entire length L (Tt=L/V). The value Vpt can be calculated by counting the approaching products 2 on the basis of the measurements by the vision system 5. However, the approaching products 2 are counted on the basis of sensor devices 10, for example position or proximity sensors, arranged upstream of the area 7, to have information about the value Vpt in advance. Alternatively, the value Vpt is a datum acquired by the production or conveying system arranged upstream of the plant.

The speed of the conveyor 13 is adjusted so that the number of containers 3 per unit of time is equal to Vpt/Npc. Bearing in mind that the distance between the containers 3 is constant, such ratio unequivocally determines the speed of the conveyor 13.

Meanwhile, the units 4a and/or 12 adjust the operative frequency of each robot 4, i.e. the number of cycles per unit of time (the term "cycle" refers to a set of pick-up and deposit operations), as a function of the value Vpt. In particular, after a relative percentage or fraction of the number of approaching products 2 to be got through has been assigned to each robot 4, the operative frequency of the robot 4 is equal to the product of said percentage or fraction and the value Vpt.

The units 4a dialogue to know which products 2 are still on the conveyor belt 6 and which places are still empty in the containers 3 after the cycles performed by the other robots 4, while the vision system 5 distributes the data and gripping positions of the various products to the various units 4a. The units 4a and the vision system 5 exchange data so that the same product 2 is not sent more than once to two cascaded robots 4.

The units 4a calculate the instantaneous positions of the products 2 using the relative positions of the products 2 supplied by the vision system 5 and using the speed of the products 2 in the direction A (preferably calculated as a function of the angle of rotation of the electric motor of the conveyor belt 6, measured by a position transducer, encoder or resolver). Moreover, they calculate the instantaneous positions of the empty places in the containers 3, as a function of the relative position of the containers 3 and using the speed of the conveyor 13 (which, in particular, is calculated as a function of the angle of rotation of a motor of the conveyor 13, measured by another encoder or resolver). At each cycle, the units 4a control the respective robots 4 so that they perform one of the following alternatives:
cycle number 1: picking up at least one product 2 from the conveyor belt 6 and depositing it in the corresponding buffer 11; or
cycle number 2: picking up at least one product 2 from the conveyor belt 6 and depositing it in a container 3; or
cycle number 3: picking up at least one product 2 from the corresponding buffer 11 and depositing it in a container 3.

Before each cycle, the unit 4a chooses which of said alternative cycles is to be performed as a function of a value Vpr equal to the number of products 2 fed in a further reference range, which is shorter than the reference range used to determine the value Vpt and which is short enough so that the value Vpr is indicative of a local or instantaneous rate of products present in at least a given area of the conveyor belt 6. This reference range can also be a length of the conveyor belt 6, an area of the conveyor belt 6, or a conveying time.

If considering the value Vpr in a fixed area upstream of the robots 4, for example in the area 7, the value Vpr oscillates around the value Vpt. In the areas 9, on the other hand, the value Vpr depends on the number of products that have been picked up by the previous robots 4.

Immediately before each cycle of the robot 4, each unit 4a determines the value Vpr associated with the corresponding area 9. In particular, the reference range for determining the value Vpr is equal to the time Tr necessary to cover the length Lr (Tr=Lr/V). Thus:

Vpr = Nr / Tr = (Nr * V) / Lr

where Nr is the number of products 2 present in the area 9, counted on the basis of the information obtained by the vision system 5 (or by the sensor device 10) and on the basis of the information about any products 2 that have already been picked up.

The number Nr is already indicative of the local or instantaneous rate of products, especially if the areas 9 in which the robots 4 can operate all have the same width, in which case Vpr=Nr would also be possible.

The unit 4a compares the calculated value Vpr with a reference value or range S, also referred to as a "set point", defined by the optimum hypothetical rate of products in each of the areas 9. If Vpr<S (i.e. few products approaching the area 9), the robot 4 is controlled to perform the cycle 3. If Vpr=S (i.e. the optimum number of products approaching the area 9), the robot is controlled to perform the cycle 2; if Vpr>S (i.e. too many products approaching the area 9), the robot 4 is controlled to perform the cycle 1.

Preferably, each robot 4 is associated with a different set point S. Conveniently, the set point S is determined as a function of the value Vpt and/or of the fractions of the number of products to be got through assigned to the robots 4. Said values are assigned beforehand (for example in the plant that is schematically illustrated in this example these can be equal to 30%, 40% and 30% of the nominal production), but can also be re-assigned in real-time, in the event of a fault in one of the systems (for example, in the event of a fault in the second robot, the assignments are modified, to 50%, 0% and 50%).

At start-up of the plant 1 there must already be some products 2 available for the buffers 11, so the first cycles of the robots 4 are performed to partially load the respective buffers 11.

Using the method described above, the robots 4 are able to work at a fixed operative frequency, and the set points S of the robots 4 can be set so as to fill the containers 3 completely without having to adjust the relative speed between the conveyor belt 6 and the conveyor 13 (except for adjusting the speed of the conveyor 13 as a function of the value Vpt).

There may be a safety control function, performed for example by the unit 4a of the last robot 4 (considering the feeding direction of the containers 3), to stop the conveyor 13 if there are any empty places in a container 3 that is about to leave the plant 1, to give the last robot 4 time to completely fill the container 3 leaving the plant. Said condition could occasionally occur in the event of a product depositing error or damage to a product or in case of variations in the flow rate that are so big they cannot be compensated for by the buffers 11.

From the above description, it is clear that modifications and variations may be made to the packaging process described herein without departing from the scope of the present invention as set forth in the appended claims.

In particular, the containers 3 and the products 2 could travel parallel in opposite directions.

Furthermore, instead of consisting of a single conveyor belt 6 the product conveying line could consist of two or more conveyor belts driven independently in order to bring groups of products arranged on the conveyor belts closer together and eliminate any empty spaces between said groups if necessary.

The vision system 5 could comprise one or more additional video cameras arranged in intermediate positions between the areas 9 of the robots 4.

The plant 1 could comprise a single buffer 11, shared by all the robots 4, and/or some of the robots 4 could be without the buffer 11.

The gripping members of the robots could have two or more suction caps, to pick up several products, one after the other before depositing them in the buffer 11 or in the container 3.

The operative frequency of the robots 4 and/or the speed of the conveyor 13 could be adjusted to allow products to leave the end of the conveyor belt 6 and then be recirculated to the beginning of the conveyor belt 6.

There could be two rows of containers 3, parallel to the conveying line defined by the conveyor belt 6, and having the same speed or different speeds and/or different feeding directions.

The vision system 5 could be replaced with a measurement system other than video cameras to determine the position of the products on the conveyor belt 6.

## Claims

1. A packaging process comprising:
- feeding products (2) at random positions on a conveying line (6);
- feeding a row of containers (3) parallel to said conveying line (6);
- determining the positions of the products (2) on said conveying line (6);
- transferring the products (2) from said conveying line (6) into said containers (3) by means of a series of robots, which are arranged along said conveying line (6) and are controlled on the basis of the determined positions of the products on said conveying line (6);
**characterised by** further comprising:
- determining a first value (Vpt) indicative of an overall rate of products approaching on said conveying line (6);
- adjusting the feeding speed of said containers (3) and/or the operative frequency of said robots (4) as a function of said first value (Vpt);
- determining a second value (Vpr) indicative of a local rate of products present in at least one given area (9) of the conveying line (6);
- providing at least one buffer (11) associated with at least part of said robots (4); and
- controlling at least part of said robots (4) so as to carry out one of the following three cycles on the basis of said second value (Vpr):
cycle a): picking up at least one product (2) from the conveying line (6) and depositing it in said buffer (11); or
cycle b) : picking up at least one product (2) from said conveying line (6) and depositing it in one of said containers (3); or
cycle c): picking up at least one product (2) from said buffer (11) and depositing it in one of said containers (3).

2. The process according to claim 1, wherein said given area of the conveying line (6) is a pick up area (9) in which said robot (4) operates.

3. The process according to claim 2, wherein said second value (Vpr) is directly proportional to the number of products (Nr) present in said pick up area (9) immediately before the cycle to be carried out.

4. The process according to claim 2 or 3, further comprising:
- determining said second (Vpr) for each of said robots (4), each said second value (Vpr) being indicative of a local rate of products which are present in the pick up area (9) of the respective robot (4).

5. The process according to any of the preceding claims, further comprising:
- comparing said second value (Vpr) with a reference value or range (S);
- carrying out said cycle c) if said second value (Vpr) is smaller than said reference value or range (S);
- carrying out said cycle b) if said second value (Vpr) is equivalent to said reference value or range (S); and
- carrying out said cycle a) if said second value (Vpr) is greater than said reference value or range (S).

6. The process according to claim 5, wherein said reference value or range (S) is determined as a function of said first value (Vpt).

7. The process according to claim 5 or 6, further comprising:
- assigning a fraction of the overall rate of products to be assigned to each said robot (4); and
- determining said reference value or range (S) on the basis of the fraction of the overall rate of products to be assigned to each said robot (4).

8. The process according to any of the preceding claims, further comprising:
- upon starting-up of said conveying line (6), controlling at least part of said robots (4) so as to partially fill said buffer (11).

9. A packaging plant (1) comprising:
- a conveying line (6) for conveying products (2) at random positions;
- a conveyor (13) parallel to said conveying line (6) and suitable to convey a row of containers (3);
- first sensor means (5) for determining the positions of the products (2) on said conveying line (6);
- a series of robots (4) arranged along said conveying line (6) and controlled on the basis of the determined positions of the products (2) to transfer the products (2) from said conveying line (6) in said containers (3);
**characterised by** further comprising:
- a buffer (11) associated with at least part of said robots (4);
- processing and control means (4a,12) configured to implement the process according to any of the preceding claims.

10. The plant according to claim 9, wherein each said robot (4) is associated with a corresponding buffer (11).

11. The plant according to claim 9 or 10, further comprising position sensors (15) suitable to determine the position of the products in said buffer (11) and connected to said processing and control means (4a).

12. The plant according to any of claims 9 to 11, wherein said buffer (11) is arranged by the side of said conveying line (6) on the opposite side with respect to said conveyor (13).

13. The plant according to any of claims 9 to 12, wherein said first sensor means are defined by a vision system (5); second sensor means (10) being arranged upstream of said vision system (5), considering the feeding direction of the products (2), and connected to said processing and control means (12) for counting the approaching products.

## Patentansprüche

1. Ein Verpackungsprozess, der Folgendes aufweist:
- Eingeben von Produkten (2) an Zufallspositionen auf eine Transportbahn (6);
- Eingeben einer Reihe von Behältern (3), parallel zu der Transportbahn (6);
- Bestimmen der Positionen der Produkte (2) auf der Transportbahn (6);
- Übertragen der Produkte (2) von der Transportbahn (6) in die Behälter (3) mittels einer Serie von Robotern, die entlang der Transportbahn (6) angeordnet sind, und die auf der Basis vorbestimmter Positionen der Produkte auf der Transportbahn (6) gesteuert werden, **dadurch gekennzeichnet, dass** ferner Folgendes vorgesehen ist:
- Bestimmen eines ersten Wertes (Vpt) der eine Anzeige bildet für eine Gesamtrate oder Geschwindigkeit der Produkte, die sich auf der erwähnten Transportbahn (6) nähern;
- Einstellen der Eingabegeschwindigkeit der Behälter (3) und/oder der entsprechenden Frequenz der erwähnten Roboter (4) als einer Funktion des erwähnten ersten Wertes (Vpt);
- Bestimmen eines zweiten Wertes (Vpr), der eine Anzeige bildet für eine örtliche Rate oder Geschwindigkeit, der in mindestens einem gegebenen Gebiet (9) der Transportbahn (6) vorhandenen Produkte;
- Vorsehen von mindestens einem Puffer (11) assoziiert mit mindestens einem Teil der erwähnten Roboter (4); und
- Steuern von mindestens einem Teil der Roboter (4) derart, dass einer der folgenden drei Zyklen auf der Basis des erwähnten zweiten Wertes (Vpr) ausgeführt wird:
Zyklus a): Aufnahme von mindestens einem Produkt (2) von der Transportbahn (6) und Ablegen des Produktes in dem erwähnten Puffer (11); oder
Zyklus b): Aufnahme von mindestens einem Produkt (2) von der Transportbahn (6) und Ablegen des Produktes in einem der Behälter (3); oder
Zyklus c): Aufnahme von mindestens einem Produkt (2) aus dem Puffer (11) und Ablegen des Produkts in einem der erwähnten Behälter (3).

2. Das Verfahren nach Anspruch 1, wobei das gegebene Gebiet der Transportbahn (6) ein Aufnahmegebiet (9) ist, in dem der erwähnte Roboter (4) arbeitet.

3. Verfahren nach Anspruch 2, wobei der zweite Wert (Vpr) direkt proportional zu der Anzahl der Produkte (Nr) vorhanden, in dem erwähnten Aufnahmegebiet (9) ist, und zwar unmittelbar bevor der Zyklus ausgeführt wird.

4. Verfahren nach Anspruch 2 oder 3, wobei ferner folgendes vorgesehen ist:
- Bestimmen des erwähnten zweiten Wertes (Vpr) für jeden der erwähnten Roboter (4), wobei jeder erwähnte zweite Wert (Vpr) eine Anzeige bildet für eine örtliche Rate oder Geschwindigkeit der Produkte, die in dem Aufnahmegebiet (9) des entsprechenden Roboters vorhanden sind.

5. Verfahren nach einem der vorgehenden Ansprüche, wobei ferner Folgendes vorgesehen ist:
- Vergleichen des erwähnten zweiten Werts (Vpr) mit einem Referenz- bzw. Bezugswert oder Bereich (S);
- Ausführen des erwähnten Zyklus (c), wenn der zweite Wert (Vpr) kleiner ist als der erwähnte Referenz- bzw. Bezugswert oder Bereich (S);
- Ausführen des Zyklus (b), wenn der zweite Wert (Vpr) äquivalent zu dem erwähnten Referenz- bzw. Bezugswert oder Bereich (S) ist; und
- Ausführen des erwähnten Zyklus (a), wenn der erwähnte zweite Wert (Vpr) größer ist als der erwähnte Referenz- bzw. Bezugswert oder Bereich (S).

6. Verfahren nach Anspruch 5, wobei der Referenzwert oder Bereich (S) bestimmt wird als eine Funktion des erwähnten ersten Wertes (Vpt).

7. Verfahren nach Anspruch 5 oder 6, wobei ferner Folgendes vorgesehen ist:
- Zuweisen einer Fraktion oder eines Bruchteils der Gesamtrate von Produkten, die jedem erwähnten Roboter (4) zugewiesen werden sollen; und
- Bestimmen des erwähnten Referenzwertes oder Bereichs (S) auf der Basis der Fraktion bzw. des Bruchteils der Gesamtrate von Produkten, die jedem erwähnten Roboter (4) zugeordnet werden sollen.

8. Verfahren nach einem der vorhergehenden Ansprüche, wobei ferner Folgendes vorgesehen ist:
- Steuern beim Starten der Transportbahn (6) mindestens einen Teil der Roboter (4) um so den erwähnten Puffer teilweise zu füllen.

9. Eine Packungsanlage (1), die Folgendes aufweist:
- eine Transportbahn (6) zum Transportieren von Produkten (2) mit Zufallspositionen;
- Transportmittel bzw. Transportband (13) parallel zu der Transportbahn (6) und geeignet zum Transport einer Reihe von Behältern (3);
- erste Sensormittel (5) zur Bestimmung der Positionen der Produkte (2) auf der Transportbahn (6);
- eine Serie von Robotern (4) angeordnet entlang der Transportbahn (6) und gesteuert auf der Basis der bestimmten Positionen der Produkte (2) zum Transfer der Produkte (2) von der erwähnten Transportbahn (6) in die erwähnten Behälter (3),
**dadurch gekennzeichnet, dass** ferner Folgendes vorgesehen ist:
- ein Puffer (11) assoziiert mit mindestens einem Teil der erwähnten Roboter (4);
- Bearbeitungs- und Steuermittel (4a, 12) konfiguriert zur Implementierung des Verfahrens gemäß einem der vorgehenden Ansprüche.

10. Anlage nach Anspruch 9, wobei jeder der Roboter (4) mit einem entsprechenden Puffer (11) assoziiert ist.

11. Anlage nach Anspruch 9 oder 10, wobei ferner Positionssensoren (15) vorgesehen sind, geeignet zur Bestimmung der Position der Produkte in dem erwähnten Puffer (11) und verbunden mit den Bearbeitungs- und Steuermitteln (4a).

12. Anlage nach einem der Ansprüche 9 bis 11, wobei der Puffer (11) auf der Seite der erwähnten Transportbahn (6) angeordnet ist, und zwar auf der entgegengesetzten Seite bezüglich der erwähnten Transportmittel (13).

13. Anlage nach einem der Ansprüche 9 bis 12, wobei die ersten Sensormittel definiert werden durch ein Visions- oder Sichtsystem (5); wobei die zweiten Sensormittel (10) stromaufwärts gegenüber dem erwähnten Sichtsystem (5) angeordnet sind, hinsichtlich der Eingaberichtung der Produkte (2), und zwar verbunden mit den Verarbeitungs- und Steuermitteln (12) zum Zählen der sich nähernden Produkte.

## Revendications

1. Procédé de conditionnement, comprenant :
- l'avance de produits (2) dans des positions aléatoires sur une chaîne de convoyage (6) ;
- l'avance d'une rangée de contenants (3) parallèles à ladite chaîne de convoyage (6) ;
- la détermination des positions des produits (2) sur ladite chaîne de convoyage (6) ;
- le transfert des produits (2) de ladite chaîne de convoyage (6) auxdits contenants (3) au moyen d'une série de robots, qui sont agencés le long de ladite chaîne de convoyage (6) et sont commandés en fonction des positions déterminées des produits sur ladite chaîne de convoyage (6) ;
**caractérisé en ce qu'**il comprend en outre :
- la détermination d'une première valeur (Vpt) indicative d'une cadence générale de produits approchant sur ladite chaîne de convoyage (6) ;
- le réglage de la vitesse d'avance desdits contenants (3) et/ou de la fréquence opérationnelle desdits robots (4) en fonction de ladite première valeur (Vpt) ;
- la détermination d'une seconde valeur (Vpr) indicative d'une cadence locale de produits présents dans au moins une zone donnée (9) de la chaîne de convoyage (6) ;
- la fourniture d'au moins une zone tampon (11) associée à au moins une partie desdits robots (4) ; et
- la commande d'au moins une partie desdits robots (4) afin de réaliser un des trois cycles suivants en fonction de ladite seconde valeur (Vpr) :
cycle a) : la collecte d'au moins un produit (2) à partir de la chaîne de convoyage (6) et son dépôt dans ladite zone tampon (11) ; ou
cycle b) : la collecte d'au moins un produit (2) à partir de ladite chaîne de convoyage (6) et son dépôt dans un desdits contenants (3) ; ou
cycle c) : la collecte d'au moins un produit (2) à partir de ladite zone tampon (11) et son dépôt dans un desdits contenants (3).

2. Procédé selon la revendication 1, dans lequel ladite zone donnée de la chaîne de convoyage (6) est une zone de collecte (9) dans laquelle ledit robot (4) fonctionne.

3. Procédé selon la revendication 2, dans lequel ladite seconde valeur (Vpr) est directement proportionnelle au nombre de produits (Nr) présents dans ladite zone de collecte (9) immédiatement avant le cycle destiné à être réalisé.

4. Procédé selon la revendication 2 ou 3, comprenant en outre :
- la détermination de ladite seconde valeur (Vpr) pour chacun desdits robots (4), chaque dite seconde valeur (Vpr) étant indicative d'une cadence locale de produits qui sont présents dans la zone de collecte (9) du robot respectif (4).

5. Procédé selon une quelconque des revendications précédentes, comprenant en outre :
- la comparaison de ladite seconde valeur (Vpr) à une valeur ou plage de référence (S) ;
- la réalisation dudit cycle c) si ladite seconde valeur (Vpr) est inférieure à ladite valeur ou plage de référence (S) ;
- la réalisation dudit cycle b) si ladite seconde valeur (Vpr) est équivalente à ladite valeur ou plage de référence (S) ; et
- la réalisation dudit cycle a) si ladite seconde valeur (Vpr) est supérieure à ladite valeur ou plage de référence (S).

6. Procédé selon la revendication 5, dans lequel ladite valeur ou plage de référence (S) est déterminée en fonction de ladite première valeur (Vpt).

7. Procédé selon la revendication 5 ou 6, comprenant en outre :
- l'attribution d'une fraction de la cadence générale de produits destinés à être attribués à chaque dit robot (4) ; et
- la détermination de ladite valeur ou plage de référence (S) en fonction de la fraction de la cadence générale de produits destinés à être attribués à chaque dit robot (4).

8. Procédé selon une quelconque des revendications précédentes, comprenant en outre :
- lors du démarrage de ladite chaîne de convoyage (6), la commande d'au moins une partie desdits robots (4) afin de remplir partiellement ladite zone tampon (11).

9. Usine de conditionnement (1), comprenant :
- une chaîne de convoyage (6) pour convoyer des produits (2) dans des positions aléatoires ;
- un convoyeur (13) parallèle à ladite chaîne de convoyage (6) et approprié pour convoyer une rangée de contenants (3) ;
- des premiers moyens capteurs (5) pour déterminer les positions des produits (2) sur ladite chaîne de convoyage (6) ;
- une série de robots (4) agencés le long de ladite chaîne de convoyage (6) et commandés en fonction des positions déterminées des produits (2) pour transférer les produits (2) de ladite chaîne de convoyage (6) auxdits contenants (3) ;
**caractérisée en ce qu'**elle comprend en outre :
- une zone tampon (11) associée à au moins une partie desdits robots (4) ;
- des moyens de traitement et de commande (4a, 12) configurés pour réaliser le procédé selon une quelconque des revendications précédentes.

10. Usine selon la revendication 9, dans laquelle chaque dit robot (4) est associé à une zone tampon correspondante (11).

11. Usine selon la revendication 9 ou 10, comprenant en outre des capteurs de position (15) appropriés pour déterminer la position des produits dans ladite zone tampon (11) et connectés auxdits moyens de traitement et de commande (4a).

12. Usine selon une quelconque des revendications 9 à 11, dans laquelle ladite zone tampon (11) est agencée à côté de ladite chaîne de convoyage (6) sur le côté opposé par rapport audit convoyeur (13).

13. Usine selon une quelconque des revendications 9 à 12, dans laquelle lesdits premiers moyens capteurs sont définis par un système de vision (5) ; des seconds moyens capteurs (10) étant agencés en amont dudit système de vision (5), en considérant la direction d'avance des produits (2), et connectés auxdits moyens de traitement et de commande (12) pour compter les produits approchant.
